# EUROPÄISCHE PATENTSCHRIFT

(11) **EP 1 687 181 B1**
(45) Veröffentlichungstag und Bekanntmachung des Hinweises auf die Patenterteilung: **10.11.2010**
(21) Anmeldenummer: 04762471.3
(22) Anmeldetag: 22.07.2004
(51) Int. Cl.: B60R 16/02, H04L 12/40

(54) **VERBINDUNGSELEMENT, VERFAHREN ZUR BUSKOMMUNIKATION ZWISCHEN EINEM STEUERGERÄT ZUR ANSTEUERUNG VON PERSONEN-SCHUTZMITTELN ALS MASTER UND WENIGSTENS EINEM VERBINDUNGSELEMENT ZUR GEWICHTSMESSUNG IN EINEM SITZ ALS SLAVE UND BUS-SYSTEM**
CONNECTING ELEMENT, METHOD FOR BUS COMMUNICATION BETWEEN A CONTROL UNIT, ACTING AS MASTER, FOR CONTROLLING OCCUPANT PROTECTION MEANS AND AT LEAST ONE CONNECTING ELEMENT, ACTING AS SLAVE, FOR MEASURING WEIGHT IN A SEAT, AND BUS SYSTEM
ELEMENT DE LIAISON, PROCEDE POUR LA COMMUNICATION PAR BUS ENTRE UN APPAREIL DE COMMANDE, EN TANT QUE MAITRE, SERVANT A COMMANDER DES MOYENS DE PROTECTION POUR DES PERSONNES ET AU MOINS UN ELEMENT DE LIAISON, EN TANT QU'ESCLAVE, SERVANT A LA MESURE DU POIDS DANS UN SIEGE, AINSI QUE SYSTEME DE BUS

(30) Priorität: 21.11.2003 DE 10354602
(43) Veröffentlichungstag der Anmeldung: 09.08.2006
(73) Patentinhaber: ROBERT BOSCH GMBH, 70442 Stuttgart (DE)
(72) Erfinder: KOPPLIN, Sascha, 74321 Bietigheim-Bissingen (DE)
(86) Internationale Anmeldenummer: PCT/DE2004/001621
(87) Internationale Veröffentlichungsnummer: WO 2005/051723

(56) Entgegenhaltungen:
- US-A- 5 822 707
- SPECKS J W ET AL: "LIN-PROTOKOLL, ENTWICKLUNGSWERKZEUGE UND SOFTWARE-SCHNITTSTELLE FUER LOKALE DATENNETZWERKE IM KRAFTFAHRZEUG" VDI BERICHTE, DUESSELDORF, DE, Nr. 1547, 5. Oktober 2000 (2000-10-05), Seiten 1-24, XP002261302 ISSN: 0083-5560
- DENUTO J V ET AL: "LIN BUS AND ITS POTENTIAL FOR USE IN DISTRIBUTED MULTIPLEX APPLICATIONS" SAE TECHNICAL PAPER SERIES, SOCIETY OF AUTOMOTIVE ENGINEERS, WARRENDALE, PA, US, Nr. 2001-1-72, 2001, Seiten 1-9, XP002285975 ISSN: 0148-7191

## Beschreibung

### Stand der Technik

Die Erfindung geht aus von einem Verbindungselement bzw. einem Verfahren zur Buskommunikation zwischen einem Steuergerät zur Ansteuerung von Personenschutzmitteln als Master und wenigstens einem Verbindungselement zur Gewichtsmessung in einem Sitz als Slave nach der Gattung des unabhängigen Patentanspruchs 1.

Aus DE 101 11 020 A1 ist bereits ein Verbindungselement bekannt, das beispielsweise als Bolzen oder Schraube ausgeführt ist und so in den Sitz eingebaut werden kann, ohne dass sich die Sitzhöhe erhöht. Dieses Verbindungselement ist zur Kraftmessung ausgebildet und kann damit die Gewichtskraft, die auf den Fahrzeugsitz ausgeübt wird, messen. Damit ist also eine Insassenklassifizierung möglich. Insbesondere liegt eine berührungslose Messung vor, da hier ein Magnetfeld und ein Hallsensor verwendet werden.

Aus XP-002261302 vom 05.10.2000 ist ein LIN-Protokoll, Entwicklungstools, Softwareschnittstellen für lokale Netze in Fahrzeugen bekannt.

### Vorteile der Erfindung

Das erfindungsgemäße Verbindungselement bzw. das Verfahren zur Buskommunikation zwischen einem Steuergerät zur Ansteuerung von Personenschutzmitteln als Master und wenigstens einem Verbindungselement zur Gewichtsmessung in einem Fahrzeugsitz als Slave mit den Merkmalen der unabhängigen Patentansprüche haben den Vorteil, dass das Verbindungselement als Gewichtssensor über einen Eindrahtbus mit dem Steuergerät zur Ansteuerung der Personenschutzmittel verbunden ist. Der Eindrahtbus, beispielsweise der sogenannte LIN-Bus, ist eine sehr einfache Ausführung eines Busses und spart im Vergleich zu Punkt-zu-Punkt-Verbindungen erheblich an Leitungen. Insbesondere können somit die Verbindungselement als Gewichtssensoren in einem Fahrzeugsitz als eine Gruppe an einer Busleitung angeschlossen sein. Damit ist auch eine logische Zusammenführung der Gewichtssensoren möglich.

Das erfindungsgemäße Verfahren hat darüber hinaus den Vorteil, dass anhand der bereits herstellerseitig vergebenen Seriennummer für die einzelnen Verbindungselemente die Adressierung während des Busbetriebs der einzelnen Verbindungselemente, die als Slaves betrieben werden, erfolgt. Dies spart Aufwand und die Konfiguration erfolgt automatisch. Dabei muss nur sicher gestellt sein, dass die Seriennummern der einzelnen Verbindungselemente unterschiedlich sind. Auch kann so die Programmierung der einzelnen Verbindungselemente beim Fahrzeughersteller entfallen. Im Falle der Konfiguration mittels eines Konfigurationspins wird die Adresse durch die Steckercodierung festgelegt.

Das Verbindungselement weist erfindungsgemäß Weise seine kennzeichnende Seriennummer, die es bei der Fertigung erhalten hat, in einem Speicher auf, wobei dann die Seriennummer, wie oben dargestellt, zur Adressierung des Verbindungselements verwendet wird, indem das Steuergerät als Master dem Verbindungselement anhand der Seriennummer eine einfache Adresse zuweist. Über diese Adresse erfolgt dann der Aufruf des Verbindungselements, so dass dann das Verbindungselement seine Daten über den Bus an das Steuergerät liefert.

Durch die in den abhängigen Ansprüchen aufgeführten Maßnahmen und Weiterbildungen sind vorteilhafte Verbesserungen der in den unabhängigen Patentansprüchen angegebenen Verbindungselementverfahren zur Buskommunikation möglich.

Besonders vorteilhaft ist, dass die Anschlussmittel in den Verbindungselementen, die für den Eindrahtbus konfiguriert sind, es mittels einer Hardwarecodierung ermöglichen, die Einbauposition der Verbindungselemente jeweils anzuzeigen. Dafür weisen die Anschlussmittel vorzugsweise neben dem Spannungsanschluss, dem Datenkommunikationsanschluss und dem Masseanschluss einen vierten Anschluss auf, der Konfigurationsanschluss genannt wird und je nach seiner Beschaltung die Einbauposition anzeigt. Der Konfigurationsanschluss kann beispielsweise an die drei anderen Leitungen jeweils angeschlossen sein oder offen sein, wobei damit vier unterschiedliche Einbaupositionen codierbar sind. Dies ist für die Anwendung für die Verbindungselemente, die üblicherweise vier Einbaupositionen an einem Fahrzeugsitz aufweisen, ausreichend. Diese Hardwarecodierung ermöglicht ebenso die Adressierung der Verbindungselemente ohne vorherige Konfiguration.

Für die Kommunikation zwischen Master und Slave muss jeder Slave eine eigene Adresse besitzen. Die Adresse kann dabei direkt von der Hardwarekodierung abgeleitet werden. Eine andere Möglichkeit ist die Konfiguration der Verbindungselemente durch einen Master. Die Auslieferung vorprogrammierter Sensoren ist ebenso denkbar.

Vorteilhafter Weise ist die Buskonfiguration hier als Master-Slave-Konfiguration aufgebaut, da das Steuergerät die Daten der Verbindungselemente benötigt und so als Master ideal konfiguriert ist.

Insbesondere ist vorgesehen, dass das Steuergerät als Master den einzelnen Slaves, also den Verbindungselementen, jeweils ein Aufforderungstelegramm übersendet, so dass diese ihre Daten an das Steuergerät übertragen. Eine Übertragung von mehreren Messwerten des gleichen Verbindungselementes führt zu einem geringeren Overhead, so dass damit Übertragungsbandbreite eingespart werden kann. Dies erfordert jedoch den Einsatz eine Ringspeichers.

Die Synchronisierung der Messwerterfassung aller Verbindungselemente kann durch ein spezielles Kommando erfolgen (Sampling Frame).

Vorteilhafter Weise weist das Bussystem genau vier Verbindungselemente auf, die jeweils am Sitz platziert sind, um die Gewichtsmessung durchzuführen. Dies ist eine Konfiguration, die eine sehr genaue Analyse der Gewichtsbelastung des Fahrzeugsitzes ermöglicht.

### Zeichnung

Ausführungsbeispiele der Erfindung sind in der Zeichnung dargestellt und werden in der nachfolgenden Beschreibung näher erläutert.

Es zeigen
- Figur 1: ein erstes Blockschaltbild des Bus-Systems,
- Figur 2: Einbaupositionen der Verbindungselemente,
- Figur 3: ein zweites Blockschaltbild des Bus-Systems,
- Figur 4: einen Übertragungsrahmen,
- Figur 5: ein erstes Flussdiagramm,
- Figur 6: ein erstes Beispiel für die Organisation des Ringspeichers,
- Figur 7: ein zweites Beispiel für die Organisation des Ringspeichers,
- Figur 8: die Anschlussmittel im Verbindungselement und
- Figur 9: ein zweites Flussdiagramm.

### Beschreibung

Gemäß gesetzlicher Vorschriften müssen Fahrzeuge in Zukunft die Personen auf den Fahrzeugsitzen identifizieren, um in Abhängigkeit von dieser Identifikation Personenschutzmittel wie Airbags, Gurtstraffer oder Überrollbügel anzusteuern. Um diese Identifikation durchzuführen sind bereits verschiedene Sensierungskonzepte vorgeschlagen worden. Dazu gehören beispielsweise optische Sensoren, Ultraschallsensoren, Radarsensoren, gewichtsmessende Matten, die in den Sitz eingebaut sind und auch Verbindungselemente, die zur Gewichtsmessung der Objekte auf dem Fahrzeugsitz konfiguriert sind. Vorteilhafter Weise werden vier solcher Verbindungselemente bei einem Fahrzeugsitz verwendet, die ein Rechteck bilden und so die Gewichtsbelastung auf dem Fahrzeugsitz sehr genau messen können. Damit ist auch eine Art von Profilierung der Gewichtsbelastung möglich.

Erfindungsgemäß wird nun vorgeschlagen, diese Verbindungselemente eines Fahrzeugssitzes an einen Eindrahtbus anzuschließen. Als Eindrahtbus kann beispielsweise der sogenannte LIN-Bus verwendet werden. Dies ist ein kostengünstiger Eindrahtbus, der erfindungsgemäß für die Verbindung zu den Verbindungselementen konfiguriert wird. Die Konfiguration betrifft die Adressierung, die Identifikation der Einbaulage, die Buskommunikation und eine Fehlerbehandlung.

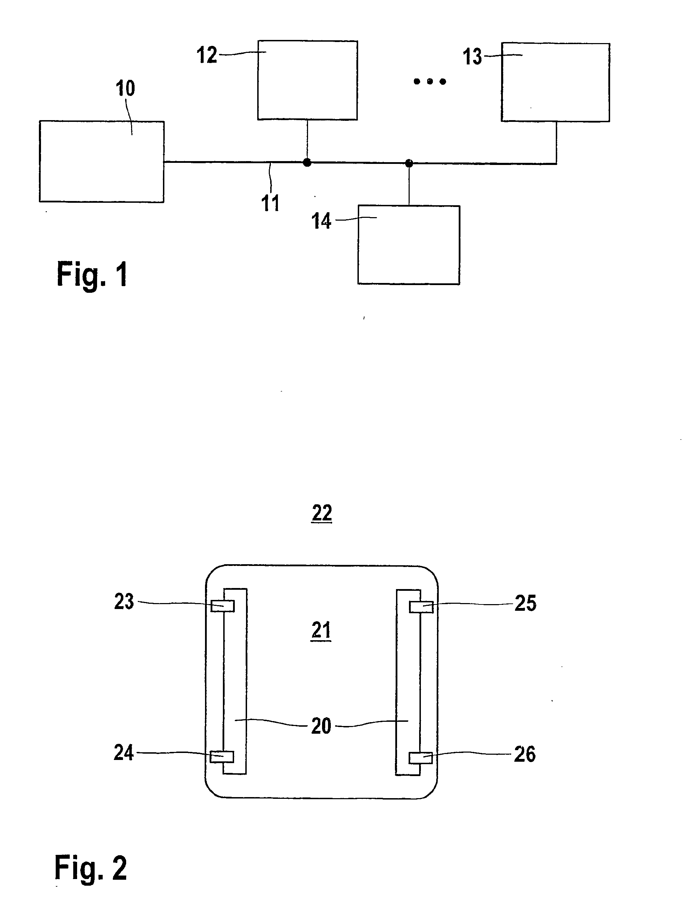

Figur 1 erläutert in einem ersten Blockschaltbild das Bus-System. Ein Busmaster 10, hier das Steuergerät zur Ansteuerung der Personenschutzmittel, ist über einen Eindrahtbus 11, also beispielsweise den LIN-Bus mit Slaves 12, 13 und 14 verbunden. In diesem Fall sind die Slaves die Verbindungselemente, die zur Gewichtskraftmessung im Fahrzeugsitz konfiguriert sind. Den einzelnen Slaves 12, 13 und 14 ist jeweils eine Adresse, eine sogenannte ID zugeordnet, die das Ansprechen durch den Busmaster 10 ermöglichen. Sinnvoll ist es auch, zusätzliche Sensoren mit an den Bus anzuschließen. Solch ein zusätzlicher Sensor kann beispielsweise ein Gurtschlossschalter sein.

Figur 2 erläutert, wie die einzelnen Verbindungselemente im Fahrzeugsitz eingebaut sind. Ein Fahrzeugsitz 21 weist einen Einbauraum 20 auf, auf den die Sensoren, also die Verbindungselemente 23 bis 26, eingebaut sind. Bei der Figur ist oben 22 die Fahrzeugfront zu sehen und den einzelnen Sensoren 22 bis 26, die ein Rechteck bilden, sind hier beispielhaft Seriennummern und ID's zugeordnet. Die Busverbindung zum Steuergerät ist hier der Einfachheit halber weggelassen. Das Steuergerät 10 wird sich üblicherweise auf dem Fahrzeugtunnel befinden. Daher ist eine elektrische Verbindung vom Fahrzeugsitz zum Chassis des Fahrzeugs notwendig. Bei herausnehmbaren Sitzen kann dies durch Stecker erfolgen oder durch eine drahtlose Verbindung, wie beispielsweise durch induktive Übertrager oder eine Funkverbindung oder auch eine optische Verbindung.

Hier gibt es 2 Ansätze:
1. Das Systen (OWS=Occupant Weight Sensing) besitzt ein eigenes Steuergerät, das kann auch direkt im Sitz integriert sein, und kommuniziert ueber einen Bus mit dem Zentralsteuergerät. Die Datenverarbeitung erfolgt dabei im OWS Steuergerät.
2. Die Sensoren kommunizieren direkt mit dem Zentralsteuergerät. Die Datenverarbeitung erfolgt im Zentralsteuergerät.

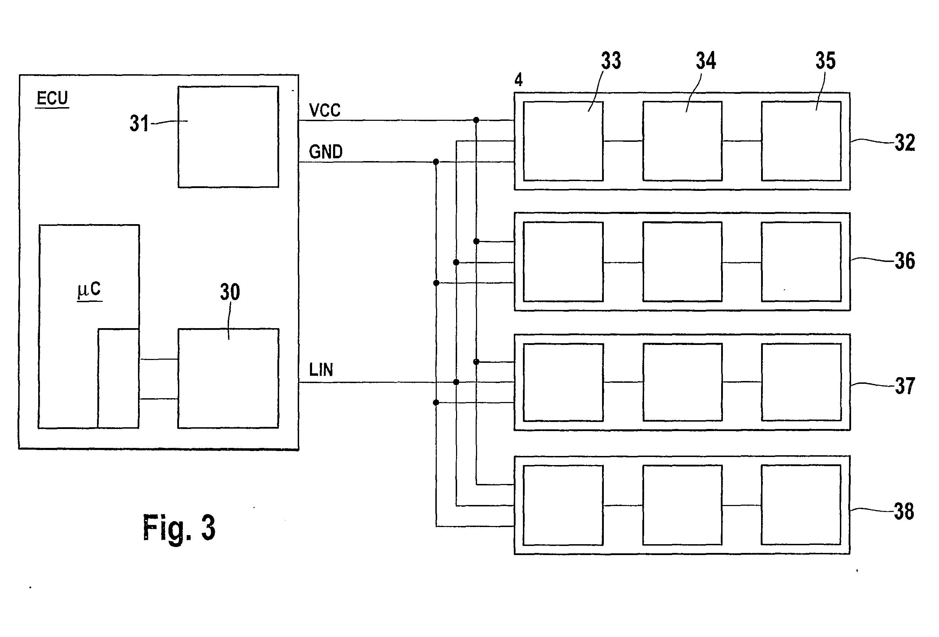

Figur 3 erläutert in einem zweiten Blockschaltbild das erfindungsgemäße Bus-System. Das Steuergerät ECU weist einen Mikrocontroller µC auf, der die Sensorsignale verarbeitet und in Abhängigkeit davon Personenschutzmittel ansteuert. Sensoren und andere Bausteine in der ECU sowie die Anschlüsse zu den außerhalb der ECU befindlichen Personenschutzmittel sind der Einfachheit halber hier weggelassen. Der Mikrocontroller µC weist einen Port SCI (serial communication interface) auf, der mit einem Schnittstellenbaustein 30 verbunden ist. Dieser Schnittstellenbaustein 30 ermöglicht die Kommunikation über den Eindrahtbus. Als Eindrahtbus wird hier der sogenannte LIN verwendet. Über diese Leitung LIN werden die Daten übertragen. Als Gegenleitung wird die Masse GND, das ist die Groundverbindung, die das Steuergerät ECU mit den Sensoren 32, 36, 37 und 38 verbindet. Auch die Datenleitung LIN ist an die Datenkommunikationsanschlüsse der Sensoren 32, 36, 37 und 38 angeschlossen. Eine weitere Leitung VCC führt von dem Steuergerät ECU zu den einzelnen Sensoren 32. 36, 37 und 38. Diese Leitung VCC dient zur Spannungsversorgung der Sensoren. Es sind hier alternative Konzepte möglich, beispielsweise, dass die Spannungsversorgung der Sensoren direkt über das Kfz-Bordspannungsnetz erfolgt oder dass die Energie für die Sensoren über die Datenleitung übertragen wird. Die Sensoren sind alle gleich aufgebaut. Beispielhaft wird dies hier für den Sensor 32 erläutert. Der Sensor 32 weist das Sensorelement 35, hier ein Hallsensor, auf, der im Zusammenspiel mit einem Magnetfeld, das durch einen Permanentmagneten erzeugt wird, ein das Gewicht kennzeichnendes Signal erzeugt. Dieses Signal wird vom Sensorelement 35 einem Auswertebaustein 34 zugeführt, der dieses Signal nicht nur verstärkt, filtert, sondern auch digitalisiert und verarbeitet. Über einen Schnittstellenbaustein 33 kann dann dieses Signal zum Steuergerät ECU übertragen werden. Der Schnittstellenbaustein 33 stellt also die sogenannte physikalische Schicht für den LIN-Bus dar. Hier erfolgt die Umsetzung in das Datentelegramm, das vom Sensor 32 zum Steuergerät ECU übertragen wird. Die anderen drei Sensoren 36, 37 und 38 haben den gleichen Aufbau. Der Einfachheit halber ist hier der Speicher, in dem die Seriennummer des jeweiligen Sensors enthalten ist, dem Baustein 34 zugeordnet.

Der Sensor kann alternativ auch aus einem Hallsensor und einem speziellen ASIC bestehen. Der ASIC beinhaltet dann alle oben genannten Funktionen. Ebenso denkbar ist ein Hallsensor, der bereits eine Signalverarbeitung und eine Schnittstelle (LIN) besitzt.

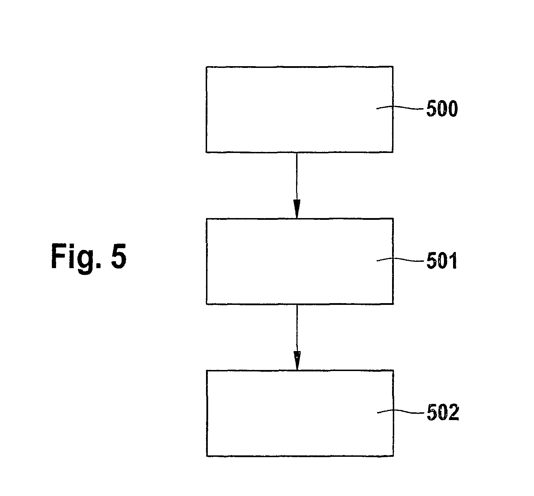

Figur 5 erläutert in einem Flussdiagramm die Initialisierung des erfindungsgemäßen Bus-Systems. In Verfahrensschritt 500 wird das Bus-System mit Energie versorgt, beispielsweise durch das Schließen des Zündschlosses des Fahrzeugs. Im Falle einer automatischen Konfiguration wird das Steuergerät ECU als erstes die Sensoren 32, 36, 37 und 38 auffordern, ihre Seriennummer zu nennen, um ihnen dann jeweils eine Adresse, also eine ID zuzuordnen. Die Seriennummer ist beispielsweise 32 Bit lang und wird vom Sensorhersteller in den Speicher des Sensors abgelegt.

Die Abfrage nach den Seriennummern verläuft nun beispielsweise wie folgt. Der Master fragt nach einer bestimmten Seriennummer. Als Antwort sind drei Möglichkeiten gegeben:
1. Der Master erhält eine Antwort, die anzeigt, dass keiner der angeschlossenen Slaves die entsprechende Seriennummer hat. In diesem Fall antwortet keiner der Slaves.
2. Der Master erhält eine Antwort, die anzeigt, dass ein Slave diese Nummer hat und darauf geantwortet hat.
3. Der Master erhält eine Antwort, die anzeigt, dass Slaves geantwortet haben, aber der Paritycheck, also die Checksumme, ist falsch.

Dies zeigt eben an, dass zwei oder mehr Slaves geantwortet haben und die Frage noch zu ungenau war. Die Frage ist nämlich derart formuliert, dass von der Seriennummer nur nach dem höchsten oder den höheren Bits gefragt wird, während die niederwertigen Bits Null oder Eins haben können, also keinen Einfluss auf die Antwort haben. Beispielsweise ist die Seriennummer 32 Bit lang und die ersten vier Bits sollen vier Einsen sein, dann antworten alle Slaves, die eine Seriennummer haben, bei der die ersten vier Bits Einsen sind. Die Slaves, die in den ersten vier Bits eine Null aufweisen, antworten darauf nicht. In dieser Weise geht der Master vor, um die einzelnen Seriennummern zu identifizieren, um dann dem einzelnen Sensor eine Identifikationsnummer einzuprogrammieren. Bekommt er nämlich Kollisionen, also dass mehrere Sensoren auf eine Frage antworten, dann muss er die nächst niederen Bits spezifizieren. Haben alle angeschlossenen Sensoren geantwortet, dann wird diesen Sensoren eine ID, also eine Adresse, einprogrammiert. In dieser Weise konfiguriert sich das Bus-System automatisch.

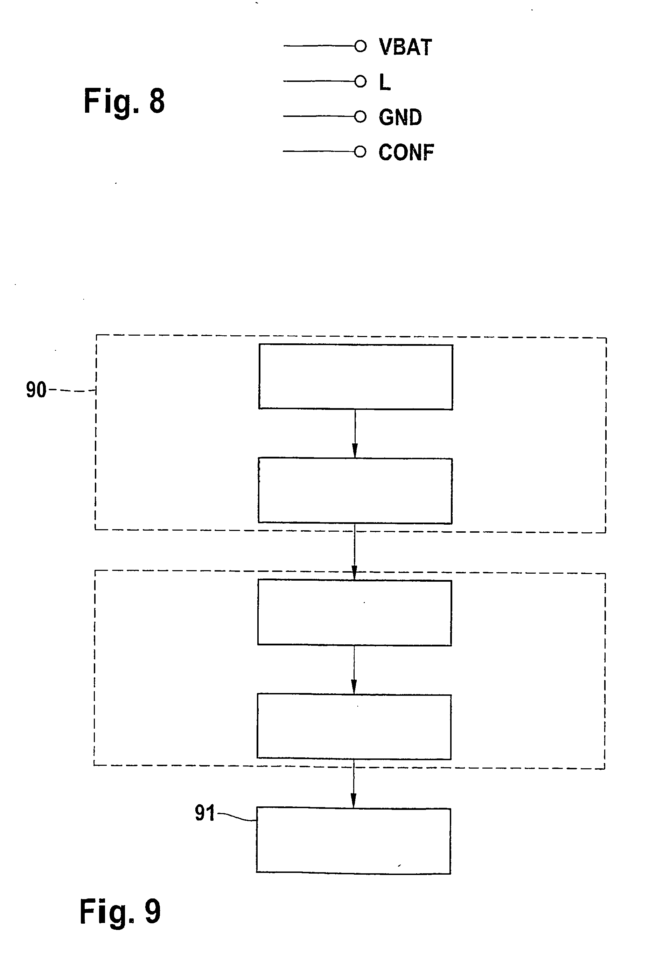

Figur 9 zeigt eine Möglichkeit, wie den Sensoren eine Adresse (LIN-ID) während der Konfiguratuionsphase zugeordnet werden kann. Nach dem Zuschalten oder einem Reset des Systems befindet es sich in der Initialisierungsphase 90. In dieser Phase 90 besitzt jeder Sensor eine, für alle jedoch gleiche LIN-ID, um eine Kommunikation zu ermöglichen. Das Steuergerät ECU übermittelt nun eine Seriennummer an alle Sensoren. Dabei kann das Steuergerät ECU die Seriennummern wie beschrieben automatisch ermitteln, oder sie stehen dem Steuergerät ECU im internen Speicher zur Vefügung. Der Sensor mit der gleichen Seriennummer wechselt nun in den Programmierzustand 1, die anderen verbleiben im Initialisierungszustand. Jetzt übermittelt das Steuergerät ECU die künftige LIN-ID des Sensors. Der Sensor speichert die ID und geht den normalen Betriebsmodus 91 über. Ebenso denkbar ist eine einmalige Programmierung. Dabei würde der Sensor direkt von der Initialisierungsphase in den normalen Betriebsmodus übergehen. Die Konfiguration kann auch durch eine Hardwarecodierung erfolgen.

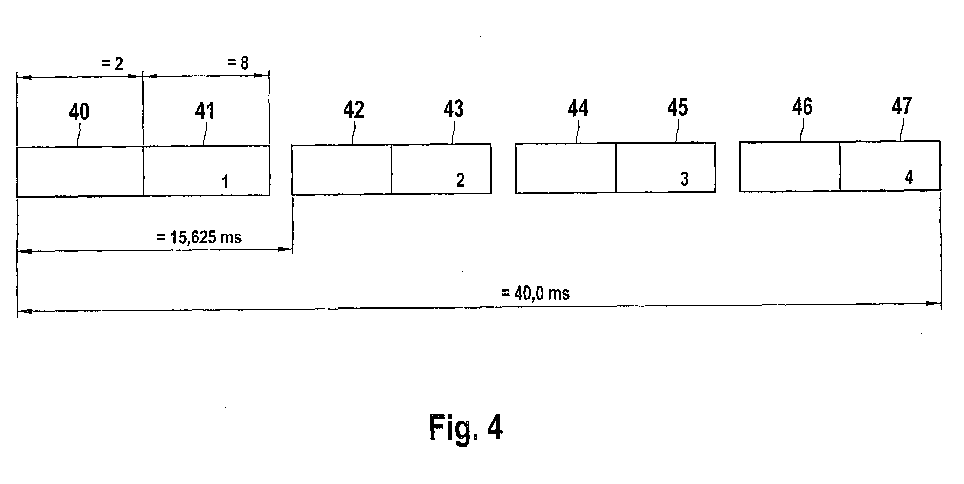

Figur 4 erläutert den Datenverkehr auf der Datenleitung LIN. Das Steuergerät ECU schickt in definierten Zeitabständen einen Sampling Frame, um eine synchrone und zeitgenaue Abtastung aller Sensoren zu gewährleisten. Nach jedem Sampling Frame liest das Steuergerät ECU die Messwerte der Sensoren. Das kann erfolgen durch nachfolgendes Lesen des Messwertes von Sensor1, Sensor2, Sensor3 und Sensor4. In dem in Figur 4 gezeigten Fall antwortet der Sensor nach einer Leseaufforderung mit 4 Messwerten. Der Ablauf sieht wie folgt aus. Das Steuergerät ECU sendet einen Sampling Frame 40. Nachfolgend sendet das Steuergerät ECU eine Leseanforderung für Sensor1 41 welcher daraufhin mit 4 Messwerten antwortet. Danach sendet das Steuergerät ECU wieder einen Sampling Frame 42 und nachfolgend liest das Steuergerät ECU die letzten 4 Messwerte von Sensor2 43. Es folgt Sampling Frame 44, Data Frame 45, Sampling Frame 46 und Data Frame 47. Da die Anwendung Abtastraten von 64Hz erfordert, folgt daraus die Zeit T_Sampling von 15,625ms. Die Zeit zur BusKommunikation T_FRAME_TYP beträgt typischerweise für 4 x 4 Messwerte 40ms. Bei einer Abfrage jedes einzelnen Messwertes aller Sensoren nach jedem Sampling Frame würde sich die typische Übertragungszeit erhöhen.

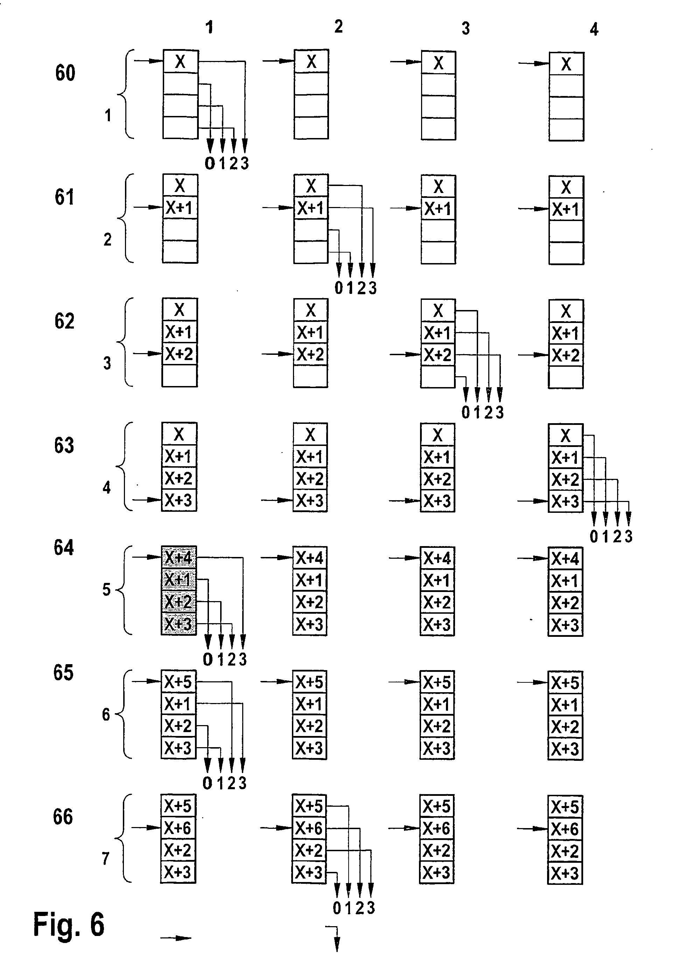

Wie oben dargestellt, wird zwischen den Sampling Frames nur ein einzelner Sensor abgefragt, um seine Daten zu liefern. Dies ermöglicht eine größere Bandbreite als die herkömmliche LIN-Kommunikation. Das erfordert allerdings, dass die einzelnen Sensoren einen Ringspeicher aufweisen. In diesem Ringspeicher werden Messwerte nacheinander abgespeichert. Durch die Verwendung eines Zeigers können die einzelnen Werte im Ringspeicher abgerufen werden. Figur 6 zeigt, wie dieser Ringpuffer oder Ringspeicher organisiert ist. Wenn die Sensoren ein Aufforderungstelegramm (Sampling Frame) vom Master erhalten, wird ein Analog-Digital-Wandler im Sensor getriggert und der Zeiger wird um einen Wert erhöht. Der neu gemessene Wert wird bei einer aktuellen Adresse im Ringspeicher abgespeichert. Wenn die Sensordaten ausgelesen werden sollen, werden die letzten vier abgespeicherten Daten im Ringspeicher zum Master gesendet.

Üblicherweise wird dabei der älteste Wert als erster Wert in das Antworttelegramm eingegeben. Sollte es zu einem Übertragungsfehler kommen, ist es dem Master nicht gestattet, erneut abzufragen, da die Bandbreite sehr begrenzt ist. Der Master sendet anschließend ein spezielles Aufforderungstelegramm (Sampling Frame). Der Sensor triggert dann wiederum den Analog-Digital-Wandler, aber er ändert nicht die Zeigerposition. Im nächsten Schritt liest dann der Master die Daten vom gleichen Sensor. Als Ergebnis fehlt dann ein Abtastwert für alle vier Sensoren. Würde der Master ohne diesen Mechanismus fortfahren, würden 4 aufeinander folgende Werte eines Sensors fehlen und damit 4 aufeinander folgende Werte zur Berechnung des Gesamtgewichts.

Figur 6 zeigt in der Zeile 60, dass beim Sensor 1 die vier Werte gelesen werden. In Zeile 61 erfolgt dies beim Sensor 2, in Zeile 62 beim Sensor 3 und in Zeile 63 beim Sensor 4. Wie in den einzelnen Blöcken bei den Sensoren in den verschiedenen Zeilen angezeigt, wächst der Ringspeicher, der hier dargestellt ist, immer um einen Wert. In Zeile 63 haben die Sensoren 1 bis 4 in allen vier Speicherzellen Werte abgelegt. In Zeile 64 kommt es nun beim Auslesen des Sensors 1 zu einem Übertragungsfehler beim neuesten Wert. Darauf hin fordert in Zeile 65 der Master die Sensoren durch einen speziellen Sampling Frame auf, den letzten Wert durch einen neuen zu ersetzen. Anschließend überträgt der Sensor 1 seine Daten. Das Ergebnis ist also in Zeile 65 und 66, dass die drei Werte x+1, x+2. x+3 sowie der neue Wert x+5 übertragen werden. In Zeile 67 wird dann in der alten Weise der Sensor 2 ausgelesen. Der Zeiger ist nun jedoch um einen Wert nach unten gerückt, so dass der letzte Wert in der Speicherzelle X+5 an der dritten Stelle im Datentelegramm ist.

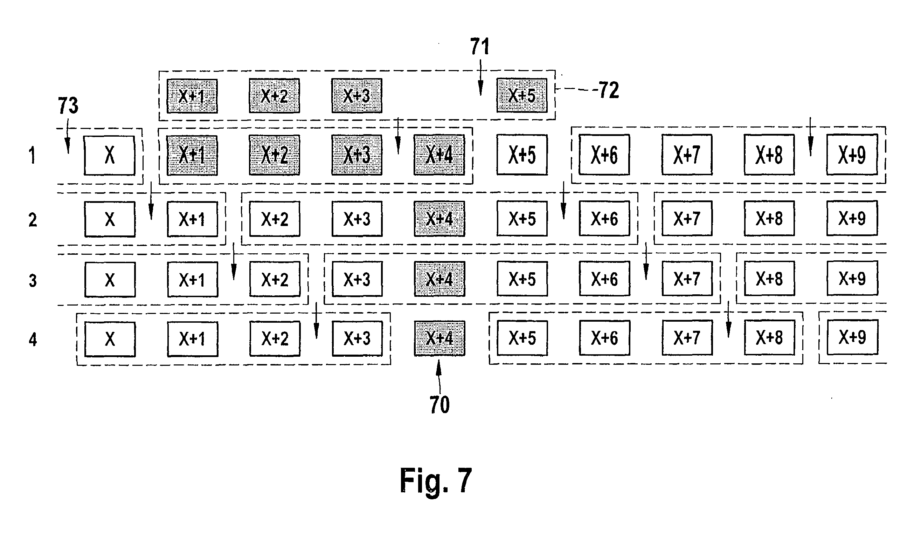

In Figur 7 wird erneut erläutert, was beim Fehler passiert. Die Figur zeigt die Daten, die vom Master empfangen werden. Die Daten X+4 von den Sensoren 1 bis 4, die mit 70 gekennzeichnet sind, sind auf Grund der Kollision beim Lesen der Daten von Sensor 1 (Zeile 64 in Figur 6)verloren gegangen. Statt dessen werden die Daten X+1, X+2, X+3 und X+5 beim zweiten Lesen übertragen.

Figur 8 zeigt die Anschlussmittel der Sensoren 32, 36, 37 und 38. Die an den Anschluss VBAT, an den die Leitung VCC angeschlossen ist, weiterhin liegt der Anschluss L vor, der mit der Leitung LIN verbunden ist und der Anschluss GND, der ebenfalls mit der Leitung GND verbunden ist, um als Masteranschluss zu dienen. Zusätzlich ist hier der Anschluss CONF vorgesehen, der zur Festlegung der LIN-ID sowie zur Identifikation der Einbaulage des Sensors dient. Dazu sind vier Möglichkeiten gegeben. Der Anschluss CONF kann auf die Anschlüsse VBAT oder L oder GND geschaltet sein, oder offen sein. Damit sind dann vier Zustände, 4 LIN-IDs und damit auch vier Einbaulagen codiert (Codierung der Einbaulage über den Kabelbaum). Ein Schnittstellenbaustein des Sensors muss den CONF-Anschluss entsprechend auswerten. Die Initialisierung der Adresse kann mit jedem Zuschalten der Betriebsspannung erfolgen. Eine Programmierung der unprogrammierten Sensoren mit dem ersten Zuschalten der Betriebsspannung ist ebenso denkbar.

## Patentansprüche

1. Verbindungselement zur Gewichtsmessung in einem Fahrzeugsitz (21), **dadurch gekennzeichnet, dass** das Verbindungselement (12 bis 14, 23 bis 26, 32, 36 bis 38) Anschlussmittel (33) an einen Eindrahtbus (LIN) und Buskommunikationsmittel (33) aufweist, dass das Verbindungselement einen Speicher aufweist, in dem eine das Verbindungselement kennzeichnende Seriennummer abgelegt ist.

2. Verbindungselement nach Anspruch 1, **dadurch gekennzeichnet, dass** die Anschlussmittel (33) an den Eindrahtbus (LIN) derart konfiguriert sind, dass die Anschlussmittel (33) mittels einer Hardwarecodierung eine Einbauposition des Verbindungselements anzeigen.

3. Verbindungselement nach Anspruch 2, **dadurch gekennzeichnet, dass** die Anschlussmittel einen Spannungsanschluss (VBAT), einen Datenkommunikationsanschluss (L), einen Masseanschluss (GND) und einen Konfigurationsanschluss (CONF) aufweisen, wobei eine Beschaltung des Konfigurationsanschlusses (CONF) die Einbauposition anzeigt.

4. Verbindungselement nach einem der vorhergehenden Ansprüche, **dadurch gekennzeichnet, dass** die Buskommunikationsmittel (33) einen Ringspeicher aufweisen, der Messwerte zur Gewichtsmessung speichert, wobei ein Zeiger (73) vorgesehen ist, um die Messwerte abzurufen.

5. Verbindungselement nach einem der vorhergehenden Ansprüche, **dadurch gekennzeichnet, dass** das Verbindungselement als Slave zur Buskommunikation konfiguriert ist.

6. Verfahren zur Buskommunikation zwischen einem Steuergerät (ECU) zur Ansteuerung von Personenschutzmitteln als Master und wenigstens einem Verbindungselement (32, 36 bis 38) zur Gewichtsmessung in einem Fahrzeugsitz (21) als Slave, über einen Eindrahtbus (LIN) wobei das Steuergerät (ECU) dem wenigstens einen Verbindungselement eine jeweilige Adresse anhand einer jeweiligen Seriennummer des wenigstens einen Verbindungselements zuordnet, wobei das Verbindungselement (12-14) einen Speicher aufweist, in dem die das Verbindungselement kennzeichnende Seriennummer abgelegt ist.

7. Verfahren nach Anspruch 6, **dadurch gekennzeichnet, dass** das Steuergerät jeweils dem wenigstens einen Verbindungselement ein Aufforderungstelegramm sendet und dass dann das Verbindungselement in Abhängigkeit von dem Aufforderungstelegramm Messwerte an das Steuergerät (ECU) überträgt.

## Claims

1. Connecting element for measuring weight in a vehicle seat (21), **characterized in that** the connecting element (12 to 14, 23 to 26, 32, 36 to 38) has connection means (33) to a single-wire bus (LIN) and bus communication means (33), **in that** the connecting element has a memory which stores a serial number denoting the connecting element.

2. Connecting element according to Claim 1, **characterized in that** the connection means (33) to the single-wire bus (LIN) are configured such that the connection means (33) indicate an installation position for the connecting element using hardware coding.

3. Connecting element according to Claim 2, **characterized in that** the connection means have a voltage connection (VBAT), a data communication connection (L), an earth connection (GND) and a configuration connection (CONF), wherein interconnection of the configuration connection (CONF) indicates the installation position.

4. Connecting element according to one of the preceding claims, **characterized in that** the bus communication means (33) have a ring memory which stores measured values for measuring weight, wherein an index (73) is provided in order to retrieve the measured values.

5. Connecting element according to one of the preceding claims, **characterized in that** the connecting element is configured as a slave for bus communication.

6. Method for bus communication between a controller (ECU) for actuating personal protection means as a master and at least one connecting element (32, 36 to 38) for measuring weight in a vehicle seat (21) as a slave, via a single-wire bus (LIN), wherein the controller (ECU) assigns the at least one connecting element a respective address using a respective serial number for the at least one connecting element, wherein the connecting element (12-14) has a memory which stores the serial number denoting the connecting element.

7. Method according to Claim 6, **characterized in that** the controller respectively sends the at least one connecting element a request message and **in that** the connecting element then takes the request message as a basis for transmitting measured values to the controller (ECU).

## Revendications

1. Élément de liaison pour mesurer le poids dans un siège de véhicule (21), **caractérisé en ce que** l'élément de liaison (12 à 14, 23 à 26, 32, 36 à 38) présente des moyens de raccordement (33) à un bus monofilaire (LIN) et des moyens de communication par bus (33), que l'élément de liaison présente une mémoire dans laquelle est stocké un numéro de série qui identifie l'élément de liaison.

2. Élément de liaison selon la revendication 1, **caractérisé en ce que** les moyens de raccordement (33) au bus monofilaire (LIN) sont configurés de telle sorte que les moyens de raccordement (33) indiquent une position montée de l'élément de liaison au moyen d'un codage physique.

3. Élément de liaison selon la revendication 2, **caractérisé en ce que** les moyens de raccordement présentent une borne de tension (VBAT), une borne de communication de données (L), une borne de masse (GND) et une borne de configuration (CONF), une connexion de la borne de configuration (CONF) indiquant la position montée.

4. Élément de liaison selon l'une des revendications précédentes, **caractérisé en ce que** les moyens de communication par bus (33) présentent une mémoire en anneau qui mémorise des valeurs mesurées pour la mesure du poids, un pointeur (73) étant prévu pour appeler les valeurs mesurées.

5. Élément de liaison selon l'une des revendications précédentes, **caractérisé en ce que** l'élément de liaison est configuré comme un esclave pour la communication par bus.

6. Procédé de communication par bus entre un module de commande (ECU) pour commander des moyens de protection de personnes, lequel fait office de maître, et au moins un élément de liaison (32, 36 à 38) pour mesurer le poids dans un siège de véhicule (21), lequel fait office d'esclave, par le biais d'un bus monofilaire (LIN), le module de commande (ECU) affectant à l'au moins un élément de liaison une adresse respective au moyen d'un numéro de série respectif de l'au moins un élément de liaison, l'élément de liaison (12-14) présentant une mémoire dans laquelle est stocké le numéro de série qui identifie l'élément de liaison.

7. Procédé selon la revendication 6, **caractérisé en ce que** le module de commande envoie à chaque fois à l'au moins un élément de liaison un télégramme de sollicitation et que l'élément de liaison transmet ensuite des valeurs mesurées au module de commande (ECU) en fonction du télégramme de sollicitation.
